Europäisches Patentamt

European Patent Office

Office européen des brevets

(19)

(11) Numéro de publication : **0 273 801 B1**

# (12) FASCICULE DE BREVET EUROPEEN

(45) Date de publication du fascicule du brevet :
27.02.91 Bulletin 91/09

(51) Int. Cl.⁵ : **F16D 66/02**

(21) Numéro de dépôt : 87402704.8

(22) Date de dépôt : 01.12.87

(54) Capteur d'usure pour avertisseur d'usure de garniture de friction.

(30) Priorité : 03.12.86 FR 8616895

(43) Date de publication de la demande :
06.07.88 Bulletin 88/27

(45) Mention de la délivrance du brevet :
27.02.91 Bulletin 91/09

(84) Etats contractants désignés :
DE GB IT

(56) Documents cités :
EP-A- 0 145 324
FR-A- 2 315 038
FR-A- 2 403 490
FR-A- 2 504 226
GB-A- 2 107 013

(73) Titulaire : **VALEO**
**64 Avenue de la Grande Armée**
**F-75017 Paris (FR)**

(72) Inventeur : **Villata, Gino**
**32, Via Moriondo**
**I-14021 Buttigliera d'Asti (IT)**

(74) Mandataire : **Lemaire, Marc**
**VALEO Département Propriété Industrielle 30,
rue Blanqui**
**F-93406 Saint-Ouen (FR)**

## Description

La présente invention concerne un capteur d'usure pour un dispositif avertisseur d'usure de garnitures de friction, notamment pour freins et autres applications, ledit capteur ayant un élément sensible en U, formé par une portion d'un conducteur électrique connectable à un circuit électrique de détection, ledit capteur étant associé à la garniture en sorte que le sommet de l'élément sensible soit en retrait de la surface libre de la garniture avant usure.

L'invention vise plus particulièrement un tel capteur d'usure pour un dispositif avertisseur d'usure dans lequel un premier signal est émis lorsque l'usure de la garniture est telle que la piste du contre-matériau, par exemple, dans le cas d'un frein, tambour, disque, couronne ou autre commence à toucher le sommet de l'élément sensible en U. Ce premier signal indique qu'il convient de changer prochainemennt la garniture. Il est suivi d'un deuxième signal, impératif, émis si l'usure est devenue telle que la piste sectionne le sommet de l'élément sensible en U.

L'invention concerne notamment un tel capteur d'usure pour un dispositif avertisseur d'usure pour les freins des véhicules automobiles, plus particulièrement, mais non exclusivement, des véhicules poids lourds, éventuellement avec remorque ou semi-remorque.

L'invention vise, de préférence, un tel capteur d'usure pour un dispositif avertisseur d'usure qui peut être monté aussi bien sur le véhicule neuf, que plus tard, par l'usager lui-même, sur un véhicule démuni à l'origine d'un tel dispositif.

Il est déjà connu, notamment par le brevet FR.A.2.504.226, des capteurs d'usure fixés sur un support de garniture et nécessitant pour leur mise en place qu'un trou soit ménagé dans la garniture de friction et son support. Ce trou comporte deux parties successives de diamètres différents.

Cependant, de tels capteurs présentent de nombreux inconvénients. Notamment la surface de garniture de friction est réduite étant donné la présence de trous la traversant de part en part. En outre, la réalisation d'un trou comportant deux parties successives de diamètres différents n'est pas aisée. De plus comme la garniture de friction est constituée par un mélange de fibres minérales, de résine (par exemple une résine phénoplaste) et de particules et/ou fibres métalliques destinées à permettre une meilleure évacuation de la chaleur créée lors de chaque freinage, lorsque la garniture s'use, il peut arriver que certaines des fibres ou particules métalliques se détachent de la garniture et entrent en contact avec l'élément sensible, après destruction de la gaine entourant cet élément, ce qui induit de faux signaux au niveau du circuit électrique de détection d'usure.

De tels capteurs d'usure sont donc sensibles à la chaleur et à la saleté, de sorte que le circuit de détection d'usure donne des indications erronées et non fiables quant à l'importance de la dégradation des garnitures de friction.

Pour pallier ces inconvénients, il est possible d'adopter une solution du type de celle décrite dans le brevet FR.A.2.403.490. Dans ce document, il est prévu une disposition avec un trou débouchant ménagé dans le support de garniture de manière à communiquer avec un trou borgne ménagé dans la garniture de friction. Une telle disposition nécessite d'utiliser une pièce de maintien cylindrique fixée à demeure dans le trou débouchant du support de garniture, tandis que l'élément de support de l'élément sensible comporte deux parties successives de diamètres différents.

Grâce à cette disposition, la surface libre de la garniture de friction n'est pas percée, donc la surface de frottement utile de la garniture est augmentée. En outre, le capteur d'usure est protégé contre les effets de la saleté, car il y a interposition de la garniture de friction entre ledit capteur d'usure et la piste du contre-matériau.

Cependant, une telle disposition présente l'inconvénient de nécessiter une pièce de maintien fixée à demeure, dès la première monte, sur le support de garniture, de sorte qu'elle ne permet pas, lors du remplacement de la garniture de friction de monter un capteur d'usure du type de celui décrit dans le brevet FR.A. 2.403.490 dans un support de garniture non pourvu d'une telle pièce de maintien à l'origine. Il n'est donc pas possible pour un usager non équipé de ce type de support de garniture d'opter pour ce type de capteur d'usure lors du remplacement de la garniture de friction. En outre, l'élément de support de l'élément sensible comporte deux parties successives de diamètres différents ainsi que deux méplats, ce qui n'est pas aisé à réaliser.

La présente invention a pour objet de pallier ces différents inconvénients et donc de créer un capteur d'usure qui puisse être monté dans un trou borgne de la garniture de friction prévu à l'avance ou non, tout en étant fiable, puisque non sensible à la chaleur et aux saletés, d'une structure simple, ne nécessitant pas de pièce de maintien spécifique fixée à demeure dans le support de garniture et étant de fabrication économique.

A cet effet, la présente invention concerne un capteur d'usure pour un dispositif avertisseur d'usure de garniture de friction, ledit capteur comportant un élément sensible en U formé par une boucle d'un conducteur électrique de détection connectable à un circuit électrique de détection, un élément de support dudit élément sensible, une ligature et un moyen de fixation, caractérisé en ce que ledit capteur est placé dans un trou borgne de la garniture situé dans le prolongement d'un trou débouchant effectué dans un support de garniture, et en ce que ledit élément de support de l'élément sensible est de forme cylindrique et présente une face supérieure maintenue en butée selon un zone de contact contre le fond du trou borgne de la garniture de friction, un évidement central de logement de la boucle étant creusé au centre de la dite zone de contact.

Grâce à une telle disposition, l'élément de support présente une forme simple, facilement réalisable et ne nécessite pas d'être entouré par une pièce métallique, et est donc de réalisation moins onéreuse.

Un des avantages de la présente invention est que le conducteur électrique constituant l'élément sensible en U maintenu par au moins une ligature, présente une boucle logée dans ledit évidement de l'élément de support et/ou du trou borgne, et donc cette boucle n'est pas incluse dans de la matière isolante en contact avec la garniture de friction.

Selon un autre aspect de la présente invention un moyen de fixation est interposé entre ledit élément de support et ladite ligature, à l'intérieur du trou débouchant du support de garniture, de sorte à maintenir ledit élément de support en butée contre le fond du trou borgne de la garniture.

On notera qu'une telle disposition permet, tout en simplifiant le montage, d'éliminer tout risque de détérioration de l'isolant du conducteur électrique lors du montage du capteur d'usure selon l'invention. En effet, lors du montage il suffit de pousser le support de l'élément sensible jusqu'à sa venue en contact avec le fond du trou borgne de la garniture de friction et d'amener ensuite le moyen de fixation au contact, d'une part avec le support de l'élément sensible et, d'autre part, avec la paroi du trou débouchant du support de garniture, l'ensemble se trouvant ainsi verrouillé en position.

Un autre avantage de la présente invention est que lorsque le capteur d'usure est mis en place l'extrémité de la boucle du conducteur électrique est écartée de la garniture de friction et en retrait de celle-ci, ce qui empêche toute interférence avec les fibres et/ou particules métalliques se trouvant dans la garniture de friction.

D'autres objets, caractéristiques et avantages de l'invention ressortiront d'ailleurs de la description qui va suivre, donnée à titre d'exemple en référence aux dessins annexés dans lesquels :

la figure 1 est une vue en élévation d'un capteur d'usure selon l'invention relié à un circuit électrique de détection d'usure ;

la figure 2 est une vue en coupe du capteur d'usure selon l'invention ;

la figure 3 est une vue en plan de la rondelle élastique de fixation ;

la figure 4 est une vue en perspective de l'élément de support de l'élément sensible ;

la figure 5 est une vue en élévation, avec coupe partielle, du capteur d'usure selon l'invention mis en place dans un support de garniture et une garniture de friction ;

la figure 6 est une vue en coupe du capteur d'usure selon une variante de l'invention, ledit capteur étant mis en place dans un support de garniture et une garniture de friction.

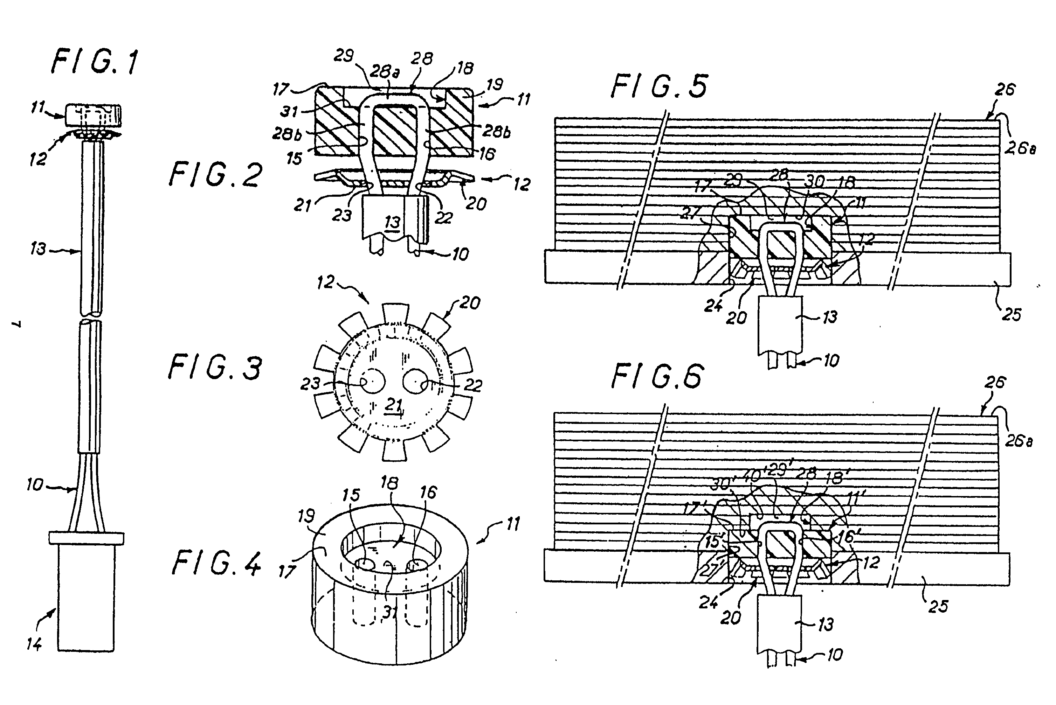

Selon la forme de réalisation représentée aux figures 1 à 5, un capteur d'usure selon l'invention comporte, un élément sensible ou conducteur électrique 10, un élément de support 11, une rondelle élastique de fixation 12 et une ligature 13. Les signaux détectés par le conducteur électrique sont transmis à un circuit électrique de détection d'usure dont on voit le connecteur en 14.

Comme cela est mieux visible aux figures 2 et 4 l'élément de support présente une forme cylindrique et est muni sur sa face supérieure 17 d'un évidement central 18, délimité par un rebord 19 en forme de couronne.

L'évidement central 18 présente un fond 31 dans lequel débouchent deux alésages 15 et 16 traversant de part en part l'élément de support.

L'élément de support est constitué d'un mélange de résine phénoplaste d'un même type que la résine phénoplaste entrant dans la composition de la garniture de friction 22, et de fibres minérales. La résine utilisée est notamment résistante aux hautes températures.

Comme cela est mieux visible aux figures 2 et 3, la rondelle élastique 12 comporte une partie annulaire crénelée 20 à sa périphérie, une partie centrale en cuvette 21 et deux passages 22 et 23 destinés aux branches du conducteur électrique 10 ou élément sensible.

Le conducteur électrique 10 est muni d'une gaine isolante et est replié sur lui-même en forme de U. Comme cela est nettement visible à la figure 2, chacune des branches du U passe dans l'un des alésages 15 et 16 puis par l'un des passages 22, 23 avant d'être réunies, par la ligature 13. Cette ligature, de type connu, ne sera pas décrite en détail ici.

La boucle 28 du conducteur 10 qui se trouve dans l'élément de support 11 présente une partie transversale 28a entre deux branches longitudinales 28b. La partie transversale 28a de cette boucle est maintenue contre le fond 31 de l'évidement 18 de sorte qu'elle se trouve en retrait par rapport à la face supérieure 17 de l'élément de support. Un espace vide 29 existe ainsi entre le sommet de la boucle 28 et la face supérieure 17. En effet, une certaine tension s'exerce sur la boucle 28, cette tension étant créée par le resserrement des deux branches longitudinales 28b de la boucle, par la ligature 13, ce resserrement étant encore plus accusé lorsque la ligature 13 est thermorétractable, ou lorsque le fil conducteur présente un grand diamètre. Il est à noter que par contre les deux branches longitudinales 28b passent librement dans les passages 22 et 23 de la rondelle élastique.

Le montage du capteur selon l'invention s'effectue de la manière ci-après explicitée.

Tout d'abord un trou débouchant 24 (figure 5) est percé à travers un support de garniture 25 et est poursuivi par un trou borgne 27 à l'intérieur d'une garniture de friction 26, sans toutefois la traverser complètement et donc sans atteindre la surface libre 26a de celle-ci. L'élément de support 11 du capteur d'usure selon l'invention est alors introduit dans les trous 24 et 27 jusqu'à ce que la face supérieure 17 de l'évidement 18 entre en contact avec le fond 30 de la garniture de friction 26.

Le contact entre élément de support et fond 30 du trou borgne 27 a lieu sur une zone périphérique définie par le rebord 19 de l'évidement 18, de sorte que la boucle 28 ne participe pas à ce contact avec le fond 30 et qu'il est ménagé, au contraire, un espace vide 29 entre le fond 30 et la boucle 28.

Le contact d'appui contre le fond 30 étant ainsi réalisé, il suffit de pousser la rondelle 12 en butée contre la face inférieure de l'élément de support 11 de sorte que sa partie annulaire crénelée 20 entre en contact avec la paroi du trou débouchant 24. Un bon serrage est ainsi obtenu, de sorte que l'ensemble est rendu peu sensible aux vibrations. Du fait de l'élasticité de la partie annulaire de ladite rondelle, et de la pression exercée sur cette partie annulaire par la paroi du trou débouchant 24, la rondelle subit une déformation de sorte qu'elle est fermement maintenue en position et en conséquence maintient également fermement en position l'élément de support 11 lequel s'appuie, contre le fond 30 du trou borgne 27.

Le fonctionnement d'un tel dispositif de détection d'usure est décrit ci-après.

Lorsque la garniture de friction s'use, suite à des freinages, la surface libre 26a de celle-ci (figure 5) tend à se rapprocher de la zone de contact entre le support 11 d'élément sensible et le fond du trou borgne, de sorte qu'après de nombreux freinages le contre-matériau du mécanisme de frein (non représenté) entre en contact avec élément sensible 10 après avoir usé la gaine entourant cet élément. Un premier signal est alors détecté et transmis au circuit de détection, qui indique que la garniture de friction devra bientôt être changée. Lors de freinages ultérieurs, la garniture de friction 26 continue de s'user de sorte qu'à un moment donné le contre-matériau vient sectionner l'ensemble de l'élément sensible 10. Dans ce cas un signal de changement impératif de la garniture de friction est transmis au circuit de détection d'usure 14.

Il est à noter l'extrême simplicité de réalisation du support 11 d'élément sensible. La forme cylindrique de celui-ci est, en effet, facile à réaliser et ne nécessite pas d'outillage spécialisé ce qui réduit considérablement le temps de fabrication et donc le coût d'un tel élément de support. En outre, le support 11 d'élément sensible est monobloc.

La disposition de la boucle 28 dans son logement 18 met cette boucle à l'abri des saletés et plus particulièrement des fibres métalliques susceptibles de s'échapper de la garniture de friction, on évite ainsi tout risque de perturbations au niveau du dispositif de détection d'usure tant que cette usure reste en deçà de la zone de contact.

Il est à noter que l'espace vide 29 permet d'éviter une transmission directe de chaleur entre la boucle 28 et la garniture 26, lorsque la garniture s'échauffe lors d'un freinage. De ce fait le capteur d'usure est mieux protégé contre les effets de la chaleur, qui pourraient conduire à une détérioration de la gaine isolante du conducteur électrique 10 notamment lorsque cette gaine s'étend sur la boucle 28. Mais même dans le cas d'un défaut de la matière isolante entourant le conducteur électrique aucun faux signal n'est à craindre étant donné que tant que la garniture de friction n'est pas entièrement usée aucune particule métallique ne vient en contact avec le conducteur électrique partiellement ou totalement dénudé.

En outre, le conducteur électrique ne se trouve pas comprimé après montage, ce qui permet à la partie conductrice du fil de ne pas bouger de sa position même si l'isolant est abimé par une surchauffe de la garniture.

Il est à noter qu'un tel montage ne nécessite aucune préparation spécifique du trou borgne de la garniture et du trou débouchant du support de garniture de friction. En variante il est possible que ces trous soient réalisés d'origine dans la garniture et le support de garniture.

Il est également à noter qu'il est très facile de monter ou de démonter ledit capteur d'usure lors du changement de la garniture de friction. En outre, un véhicule non équipé à l'origine de support de garniture à trous débouchants peut très bien en être muni lors du changement des garnitures de friction sans que cela implique le changement du support de garniture, En effet, il suffit, comme indiqué, d'effectuer un perçage du support de garniture et un perçage non débouchant de la garniture pour équiper un quelconque véhicule d'un capteur selon l'invention.

En variante, il est possible de faire en sorte que l'évidement central du support 11 présente une forme autre que circulaire, par exemple, oblongue. De même, il est possible d'utiliser comme moyen de fixation une rondelle élastique dans laquelle toute la partie centrale en cuvette 21 soit supprimée de sorte à laisser un seul passage de grand diamètre pour les deux branches 28b de la boucle 28.

En outre, la zone périphérique de la rondelle élastique 12 peut être entièrement ou partiellement crénelée ou dentée : elle peut présenter ainsi, par exemple, une forme polygonale, en particulier carrée ou triangulaire, avec respectivement quatre ou trois pointes adaptées à s'accrocher sur la paroi de l'alésage 24 du support de garniture 25.

Selon une autre variante le moyen de fixation peut être constitué par un fil d'acier pour ressort dont les deux extrémités s'appliquent par arcboutement sur la paroi du trou débouchant 24.

Dans la forme de réalisation de la figure 6 l'évidement central 18' du logement de la boucle 28 est réalisé non plus dans la face supérieure 17' du support 11', mais dans le fond 30' du trou borgne 27' ; ce trou borgne se divise ainsi en une partie d'entrée de diamètre correspondant à celui du support 11' et une seconde partie 40' formant le logement 18', de diamètre réduit, avec entre ces deux parties l'épaulement formant la zone de contact d'appui de la face supérieure (17), ici plane, du support 11'. Deux alésages 15' 16' traversent de part en part l'élément de support 11.

Il est à noter que cette disposition présente les mêmes avantages que le mode de réalisation précédemment décrit pour l'élément de support. En outre, un tel élément de support présente une forme plus simple à réaliser que l'élément de support précédemment décrit et peut ainsi être plus facilement réalisé en grande série. Toutes les variantes décrites pour le mode de réalisation précédent peuvent être reprises dans le cadre de ce second mode de réalisation.

Bien entendu, la présente invention n'est pas limitée aux détails des formes de réalisation ci-dessus et englobe également toute variante à la portée de l'homme de l'art. A savoir, il est possible, par exemple de réaliser l'élément de support en toute matière appropriée, de ne pas munir l'élément sensible de gaine isolante, d'effectuer l'évidemment de logement de la boucle 28, partie dans l'élément de support et partie dans la garniture de friction.

## Revendications

1. Capteur d'usure pour un dispositif avertisseur d'usure de garniture de friction, ledit capteur comportant un élément sensible en U (10) formé par une boucle (28) d'un conducteur électrique de détection connectable à un circuit électrique de détection, un élément de support (11, 11') dudit élément sensible, une ligature (13) et un moyen de fixation (12), caractérisé en ce que ledit capteur est placé dans un trou borgne (27, 27') de la garniture situé dans le prolongement d'un trou débouchant (24) effectué dans un support de garniture (25), et en ce que ledit élément de support (11, 11') de l'élément sensible est de forme cylindrique et présente une face supérieure (17, 17') maintenue en butée selon une zone de contact contre le fond du trou borgne de la garniture de friction, un évidement central (18, 18') de logement de la boucle (28) étant creusé au centre de la dite zone de contact.

2. Capteur d'usure selon la revendication 1, caractérisé en ce que c'est ladite face supérieure (17) qui est creusée d'un évidement (18) et en ce que ledit évidement (18) présente un fond (31), la boucle (28) de l'élément sensible (10) étant maintenue au contact de ce fond (31) en retrait par rapport à ladite face supérieure (17).

3. Capteur d'usure selon la revendication 1 ou 2 caractérisé par un évidement (18') creusé dans le fond du trou borgne (27') à l'intérieur d'une zone de contact annulaire formée par un épaulement (30').

4. Capteur d'usure selon l'une quelconque des revendications précédentes, caractérisé en ce que deux alésages (15, 16, 15', 16')) traversent de part en part ledit élément de support (11, 11').

5. Capteur d'usure selon l'une quelconque des revendications précédentes caractérisé en que le moyen de fixation (12) est une pièce amovible adaptée à se déformer élastiquement au contact de la paroi du trou débouchant (24) du support de garniture, de sorte à solliciter ledit élément de support (11, 11') en butée contre le fond (30, 30') du trou borgne (27, 27')) de la garniture.

6. Capteur d'usure selon la revendication 5, caractérisé en ce que ledit moyen de fixation (12) est muni de deux passages (22, 23) respectivement destinés aux branches (28b) de l'élément sensible (10).

7. Capteur d'usure selon la revendication 5, caractérisé en ce que ledit moyen de fixation (12) est muni en son centre d'un passage unique pour les branches de l'élément sensible.

8. Capteur d'usure selon l'une quelconque des revendications précédentes, caractérisé en que ledit moyen de fixation (12) présente à sa périphérie une zone crénelée ou dentée, en particulier polygonale avec des pointes.

9. Capteur d'usure selon l'une quelconque des revendications précédentes, caractérisé en ce que ledit moyen de fixation est une rondelle élastique (12).

10. Capteur d'usure selon l'une quelconque des revendications 1 à 8, caractérisé en ce que ledit moyen de fixation est un tronçon de fil d'acier pour ressort adapté à s'arcbouter sur la paroi du trou débouchant (24).

## Ansprüche

1. Verschleißfühler für eine Abnutzungswarnvorrichtung für einen Reibbelag, wobei der genannte Fühler ein U-förmiges Fühlerelement (10), bestehend aus einer Schleife (28) eines elektrischen Erfassungsleiters mit Anschlußmöglichkeit an einen elektrischen Erfassungsstromkreis, ein Trägerelement (11, 11') für das genannte Fühlerelement, eine Verbindung (13) sowie ein Befestigungsmittel (12) enthält, **dadurch gekennzeichnet,** daß der genannte Fühler in einem Blindloch (27, 27') des Belages angebracht ist, welches in der Verlängerung eines in einem Belagträger (25) vorgesehenen Durchgangslochs (24) liegt, und daß das genannte Trägerelement (11, 11') des Fühlerelements zylinderförmig ist und eine Oberseite (17, 17') aufweist, die sich entsprechend einer Kontaktzone am Boden des Blindloches des Reibbelages abstützt, wobei eine mittlere Aussparung (18, 18') zur Aufnahme der Schleife (28) in der Mitte der genannten Kontaktzone vorgesehen ist.

2. Verschleißfühler nach Anspruch 1, **dadurch gekennzeichnet,** daß die genannte Oberseite (17) mit einer Aussparung (18) versehen ist und daß die genannte Aussparung (18) einen Boden (31) aufweist, während die Schleife (28) des Fühlerelements (10) im Verhältnis zur genannten Oberseite (17) zurückspringend mit diesem Boden (31) in Kontakt gehalten wird.

3. Verschleißfühler nach Anspruch 1 oder 2, **gekennzeichnet durch** eine Aussparung (18'), die im Boden des Blindloches (27') im Innern einer ringförmigen Kontaktzone, die durch eine Schulter (30') gebildet wird, vorgesehen ist.

4. Verschleißfühler nach einem der vorherigen Ansprüche, **dadurch gekennzeichnet,** daß zwei Bohrungen (15, 16, 15', 16')) vollständig durch das genannte Trägerelement (11, 11') hindurchtreten.

5. Verschleißfühler nach einem der vorherigen Ansprüche, **dadurch gekennzeichnet,** daß das Befestigungsmittel (12) ein abnehmbares Teil ist, welches sich bei Kontakt mit der Wand des Durchgangsloches (24) des Belagträgers elastisch verformen kann, so daß das genannte Trägerelement (11, 11') gegen den Boden (30, 30') des Blindloches (27, 27')) des Belages beansprucht wird.

6. Verschleißfühler nach Anspruch 5, **dadurch gekennzeichnet,** daß das genannte Befestigungsmittel (12) mit zwei Durchtritten (22, 23) versehen ist, die jeweils für die Schenkel (28b) des Fühlerelements (10) bestimmt sind.

7. Verschleißfühler nach Anspruch 5, **dadurch gekennzeichnet,** daß das genannte Befestigungsmittel (12) in der Mitte mit einer einzigen Durchgangsöffnung für die Schenkel des Fühlerelements versehen ist.

8. Verschleißfühler nach einem der vorherigen Ansprüche, **dadurch gekennzeichnet,** daß das genannte Befestigungsmittel (12) an der Peripherie eine gerändelte oder gezackte, insbesondere polygonale Zone mit Spitzen aufweist.

9. Verschleißfühler nach einem der vorherigen Ansprüche, **dadurch gekennzeichnet,** daß das genannte Befestigungsmittel eine Federscheibe (12) ist.

10. Verschleißfühler nach einem der Ansprüche 1 bis 8, **dadurch gekennzeichnet,** daß das genannte Befestigungsmittel ein Stück Federstahldraht ist, welches sich an der Wandung des Durchgangsloches (24) abstützen kann.

## Claims

1. A wear sensor for a warning device for warning of wear in a friction liner, wherein the said sensor includes a U-shaped sensing element (10) formed by a loop (28) of an electrical detection conducting element which is connectable to an electrical detection circuit, a support element (11, 11') for the said sensing element, a ligature (13) and a fastening means (12), characterised in that the said sensor is placed in a blind hole (27, 27') of the liner located as an extension of an open-ended hole (24) formed in a liner support (25), and in that the said support element (11, 11') for the sensing element is cylindrical in shape and has an upper face (17, 17') which is maintained in abutment in a contact zone against the base of the blind hole of the friction liner, with a central opening (18, 18') for housing the loop (28) being sunk into the centre of the said contact zone.

2. A wear sensor according to Claim 1, characterised in that it is the said upper face (17) into which an opening (18) is sunk, and in that the said opening (18) has a base (31), with the loop (28) of the sensing element (10) being maintained in contact with the said base (31) and spaced away from the said upper face (17).

3. A wear sensor according to Claim 1 or Claim 2, characterised by an opening (18') which is sunk into the base of the blind hole (27') within an annular zone of contact defined by a shoulder (30').

4. A wear sensor according to any one of the preceding Claims, characterised in that two bores (15, 16, 15', 16') extend through the said support element (11, 11') from one side thereof to the other.

5. A wear sensor according to any one of the preceding Claims, characterised in that the fastening means (12) is a removable member which is adapted to be resiliently deformed into contact with the wall of the open-ended hole (24) of the liner support, so as to bias the said support element (11, 11') into abutment against the base (30, 30') of the blind hole (27, 27') of the liner.

6. A wear sensor according to Claim 5, characterised in that the said fastening means (12) is provided with two passages (22, 23) which are respectively adapted to the branches (28b) of the sensing element (10).

7. A wear sensor according to Claim 5, characterised in that the said fastening means (12) is provided at its centre with a single passage for the branches of the sensing element.

8. A wear sensor according to any one of the preceding Claims, characterised in that the said fastening means (12) has at its periphery a crenellated or toothed zone, in particular a pointed, polygonal zone.

9. A wear sensor according to any one of the preceding Claims, characterised in that the said fastening means is a resilient ring (12).

10. A wear sensor according to any one of Claims 1 to 8, characterised in that the said fastening means is a piece of spring steel wire which is adapted to bear on the wall of the open-ended hole (24).

FIG.1

FIG.2

FIG.3

FIG.4

FIG.5

FIG.6